# EUROPEAN PATENT SPECIFICATION

(11) **EP 0 921 955 B1**
(45) Date of publication and mention of the grant of the patent: **03.05.2000**
(21) Application number: 96935786.2
(22) Date of filing: 29.08.1996
(51) Int. Cl.: B60C 11/11

(54) **INDUSTRIAL SERVICE AGRICULTURAL TIRE**
LANDWIRTSCHAFTSREIFEN FÜR GEWERBLICHE ZWECKE
PNEU POUR MATERIEL AGRICOLE DE TYPE INDUSTRIEL

(43) Date of publication of application: 16.06.1999
(73) Proprietor: THE GOODYEAR TIRE & RUBBER COMPANY, Akron, Ohio 44316-0001 (US)
(72) Inventor: BONKO, Mark, Leonard, Uniontown, OH 44685 (US)
(74) Representative: Leitz, Paul
(86) International application number: US9613785
(87) International publication number: WO9808697

(56) References cited:
- EP-A- 0 089 320
- DE-A- 2 751 295
- DE-U- 8 907 334
- US-A- 4 649 976
- PATENT ABSTRACTS OF JAPAN vol. 7, no. 9 (M-185) [1154] , 14 January 1983 & JP 57 167802 A (BRIDGESTONE TIRE KK), 15 December 1982,

## Description

### Technical Field

This invention relates to a pneumatic agricultural tire for an industrial type tractor or like vehicle.

### Background Art

Farm tire designs for industrial service are classified as R-4 service. Overall R-4 service is quite severe and typically involves high loads at a large degree of roading. The vehicles to which the tires are mounted typically are exposed to large amounts of debris, hard packed soil conditions and high load service conditions.

Often times the vehicle has a back hoe bucket or a front skid loader attached to the vehicle. The tires must traverse gravel and broken concrete and hard packed dirt normally. Occasionally the work site can get rain soaked requiring good traction in wet soil conditions.

These tires are generally relatively small and typically have a nominal rim diameter of 28" (71 cm) or less. They generally have a nonskid depth at the centerline of the tire at approximately 1" (2.54 cm). A typical tire may be a 19.5LR24 tire. This tire when produced in a radial construction will have a carcass with 3 to 4 plies of synthetic cord reinforcement. The cords generally are nylon or polyester. The carcass will further include four belts of high flex polyester, nylon or aramid. Historically, these tires have been all fabric reinforced in order to provide better ride and handling.

The most relevant prior art corresponding to the preamble of claim 1 is Japanese Publication No. 57167802, the tire of this invention travels well on both good and soft roads. Its tread pattern consists of three regions with almost the same width. At the two side regions, lugs are arranged alternately on the tire circumference to form arrowhead pattern. They are at an acute angle to the tire equator. At the central region, independent long blocks are laid across the tire equator. Each block is placed on a line extended from the longitudinal centerline of one lug located on one of the side regions. The adjacent blocks face each other and overlap for a certain range but separated by a groove along the equator.

Another prior art document, (U.S. Patent No. 4,659,976), discloses a tire for use on a military vehicle, the tire has traction elements separated by straight grooves.

Yet another prior art, (German Patent No. DE 27 51 295 A1), discloses a farm tire having elongated lugs 6 spaced from the center of the tread and in at least one embodiment, the lugs 6 are separated by square blocks 9.

There has been a continual tradeoff in attempting to increase the aggressive offroad and tractor performance of these tires while maintaining the treadwear durability and ride requirements. The invention disclosed in this patent application teaches a novel tread that is both comfortable riding, long wearing while also achieving superior offroad traction.

### Disclosure of the Invention

**Summary**. A pneumatic agricultural tire 20 for an industrial type tractor or like vehicle having a maximum section width an axis of rotation, an equatorial plane (EP), centered between the maximum section width and being perpendicular to the axis, a casing having a belt reinforcement structure 26 and a carcass 21 reinforced with rubber coated cords, a rubber tread 32 disposed radially outward of the carcass 21 and belt 26, the tread 32 being divided on each side of the equatorial plane into a first and second tread half, the tread has a pair of lateral edges 33A,33B, the distance between the lateral edges defines the tread width. The tread 32 has an inner tread 34 and a plurality of tread lugs 40,50 projecting radially from the inner tread 34.

The tread 32 has a plurality of central lugs 50 and a plurality of shoulder lugs 40. The plurality of central lugs 50 are arranged in a circumferentially continuous row 60 and extend across the equatorial plane (EP). Each central lug 50 preferably is similar in shape and in orientation relative to each circumferentially adjacent central lug 50. Each central lug 50 has a leading end 51 and a trailing end 53. The leading end 51 of each central lug 50 is located on an opposite side of the equatorial plane relative to the trailing end 53 of the same central lug 50.

The plurality of shoulder lugs 40 are divided into first and second rows. One row 44,46 extends from each of the lateral edges 33A,33B towards the equatorial plane of the tire 20. The shoulder lugs 40 have an axially inner end 41 axially spaced from a leading end 51 and a trailing end 53 of the axially adjacent central lugs 50. Preferably, the shoulder lugs 40 extending from each lateral edge 33A,33B are similar in shape and have an overall lug length of 40% of the tread width. Each shoulder lug 40 is located within one tread half 32A or 32B.

The shoulder lugs 40 and central lugs 50 are axially spaced at the outer surface 58 of the lug 40,50 such that the axially inner ends 41 of the first and second rows 44,46 of shoulder lugs 40 are axially aligned within each respective row 44,46 and the leading ends 51 and trailing ends 53 of the central lugs 50 are respectively axially aligned. A plane P₁ tangent to the axially inner ends 41 of the first row 44 of shoulder lugs 40 is spaced an axial distance d₁ from a plane C_{T} tangent to the trailing ends 53 of the central lugs 50. A plane P₂ tangent to the axially aligned inner ends 41 of the second row 46 of shoulder lugs 40 is spaced a distance d₂ from a plane C_{L}, the plane C_{L} being tangent to the leading ends of the central lugs. The distances d₁ and d₂ form two circumferentially continuous straight channels around the periphery of the tread. In the preferred embodiment the distances d₁ and d₂ are equal and are about 5 % of the tread width. The planes C_{T} and C_{L} are each located an axial distance of at least 5 % of the tread width or more from the equatorial plane. Preferably the planes C_{T} and C_{L} are equally spaced from the equatorial plane a distance greater than 10%.

In one embodiment the shoulder lugs 40 of the first and second rows 44,46 are oppositely oriented and similarly inclined relative to the shoulder lugs 40 of the opposite row 44,46. In this case, the tire tread 32 is a nondirectional tread having equal traction in both the forward and reverse direction.

In a second embodiment the shoulder lugs of the first and second rows are oppositely oriented and oppositely inclined relative to the shoulder lugs of the opposite row. In this case, the tire tread is directional and has a superior tractive capability in the forward direction when the tire is mounted such that the leading ends contact the ground first as the tire rolls. The tire in either case has a very open tread pattern for its application and when the tire is normally inflated and loaded the tread has a net-to-gross ratio of less than 35% preferably about 30%.

These tires typically have nominal rim diameter of 28" (71 cm) or less and a tread lug height that is measured from the inner tread to the radially outer surface of the lug at the equatorial plane, the lug height being an industrially standard R-4 lug height.

Each shoulder lug and central lug has a surface area centroid M. The centroid M of the first row shoulder lug, a central lug and a second row shoulder lug lie on a substantially straight line S_{L}. S_{L} is inclined in a range of 35° to 45° relative to an axial plane. In the nondirectional tire the shoulder lugs of the first and second row and the central lugs each have lug center lines intersecting the centroid M of the respective lugs. The lug centerlines are substantially aligned with the line S_{L}. In the nondirectional tire each shoulder lug and central lug has a centroid M, the centroid of the first or second shoulder lug and a central lug lie in a substantially straight line S_{L2}, S_{L2} being inclined in the range of 35 ° to 45 ° relative to an axial plane. Each shoulder lug and central lug have a center line intersecting the centroids M of the respective lugs. The lug centerlines of the first shoulder lug and the central lug are substantially aligned with the line L₂. The shoulder lug center line of the second row lug is similarly but oppositely inclined relative to the line S_{L2}.

**Definitions.** "Aspect Ratio" means the ratio of its section height to its section width.

"Axial" and "axially" means the lines or directions that are parallel to the axis of rotation of the tire.

"Bead" or "Bead Core" means generally that part of the tire comprising an annular tensile member, the radially inner beads which are associated with holding the tire to the rim being wrapped by ply cords and shaped, with or without other reinforcement elements such as flippers, chippers, apexes or fillers, toe guards and chafers, the bead or beads under the tread being encapsulated in tread rubber can be with or without other cord reinforced fabric elements.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Bias Ply Tire" means that the reinforcing cords in the carcass ply extend diagonally across the tire from bead-to-bead at about a 25-65 ° angle with respect to the equatorial plane of the tire, the ply cords running at opposite angles in alternate layers.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction.

"Design Rim" means a rim having a specified configuration and width. For the purposes of this specification, the design rim and design rim width are as specified by the industry standards in effect in the location in which the tire is made. For example, in the United States, the design rims are as specified by the Tire and Rim Association. In Europe, the rims are as specified in the European Tyre and Rim Technical Organization--Standards Manual and the term design rim means the same as the standard measurement rims. In Japan, the standard organization is The Japan Automobile Tire Manufacturer's Association.

"Design Rim Width" is the specific commercially available rim width assigned to each tire size and typically is between 75% and 90% of the specific tire's section width.

"Equatorial Plane (EP)" means the plane perpendicular to the tire's axis of rotation and passing through the center of its tread.

"Footprint" means the contact patch or area of contact of the tire tread with a flat surface at zero speed and under normal load and pressure.

"Inner" means toward the inside of the tire and "outer" means toward its exterior.

"Lateral Edge" means the axially outermost edge of the tread as defined by a plane parallel to the equatorial plane and intersecting the outer ends of the axially outermost traction lugs at the radial height of the inner tread surface.

"Leading" refers to a portion or part of the tread that contacts the ground first, with respect to a series of such parts or portions, during rotation of the tire in the direction of travel.

"Net-to-gross Ratio" means the ratio of the surface area of the normally loaded and normally inflated tire tread rubber that makes contact with a hard flat surface, divided by the total area of the tread, including noncontacting portions such as grooves as measured around the entire circumference of the tire.

"Normal Inflation Pressure" means the specific design inflation pressure assigned by the appropriate standards organization for the service condition for the tire.

"Normal Load" means the specific design inflation load assigned by the appropriate standards organization for the service condition for the tire.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Tire Design Load" is the base or reference load assigned to a tire at a specific inflation pressure and service condition; other load-pressure relationships applicable to the tire are based upon that base or reference.

"Trailing" refers to a portion or part of the tread that contacts the ground last, with respect to a series of such parts or portions during rotation of the tire in the direction of travel.

"Tread Arc Width" means the width of an arc having its center located on the plane (EP) and which substantially coincides with the radially outermost surfaces of the various traction elements (lugs, blocks, buttons, ribs, etc.) across the lateral or axial width of the tread portions of a tire when the tire is mounted upon its designated rim and inflated to its specified inflation pressure but not subject to any load.

"Tread Width" means the arc length of the tread surface in the axial direction, that is, in a plane parallel to the axis of rotation of the tire.

"Unit Tread Pressure" means the radial load borne per unit area (square centimeter or square inch) of the tread surface when that area is in the footprint of the normally inflated and normally loaded tire.

### Brief Description of Drawings.

The following is a brief description of the drawings in which like parts bear like reference numerals and in which:

Fig. 1 is a perspective view of a first embodiment tire according to the invention.

Fig. 2 is a plan view of the tire of Fig. 1.

Fig. 3 is an enlarged fragmentary view of a portion of the tread of the tire taken from Fig. 2.

Fig. 4 is a cross-sectional view of the tire taken along lines 4-4 of Fig. 2.

Fig. 5 is a plan view of a portion of the contact patch of the first embodiment tire according to the present invention.

Fig. 6 is a perspective view of a second embodiment tire according to the invention.

Fig. 7 is a plan view of the tire of Fig. 6.

Fig. 8 is an enlarged fragmentary view of a portion of the tread of the tire taken from Fig. 7.

Fig. 9 is a plan view of a portion of the contact patch of the second embodiment tire according to the present invention.

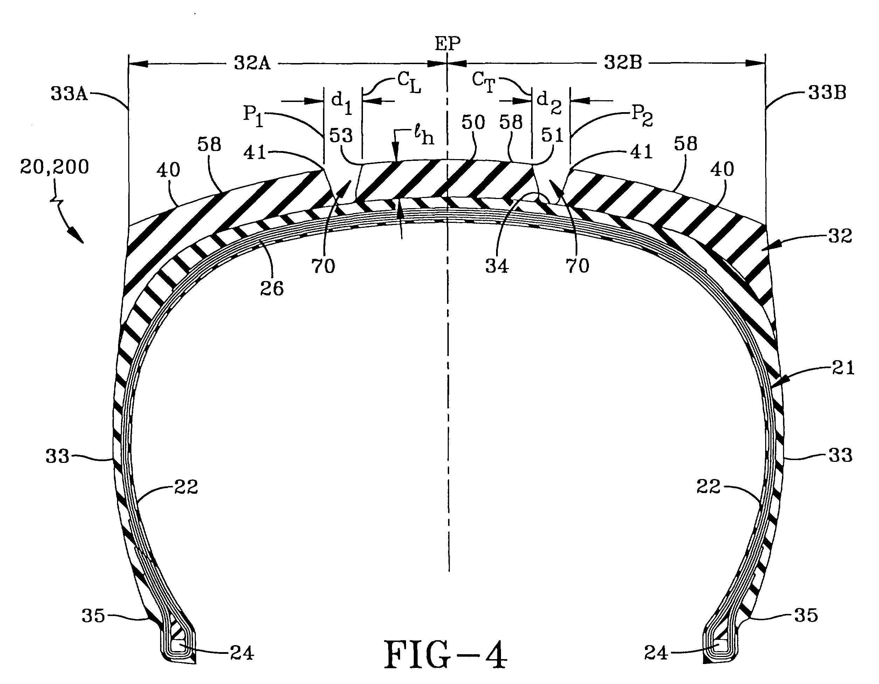

**Detailed Description of the Invention.** Now referring to Fig. 4 a tire is shown in cross-sectional view generally as reference numeral 20. The tire has a carcass 21 having one or more carcass plies 22 extending circumferentially about the axis rotation of the tire. As illustrated the tire preferably has 3 to 4 cord reinforced plies having synthetic nylon or polyester cords. The carcass plies are anchored around a pair of substantially inextensible annular beads 24. A belt reinforcing member 26 has one or more belt plies disposed radially outward from the carcass plies. Preferably four belts are employed. The belts being of a polyester, nylon or aramid cord reinforcement alternatively the cords can be of an ultra high tensile monofilament steel cord reinforcement. These belt plies provide reinforcement for the crown region of the tire 20. A circumferentially extending tread 32 is located radially outwardly of the belt reinforcing structure 26.

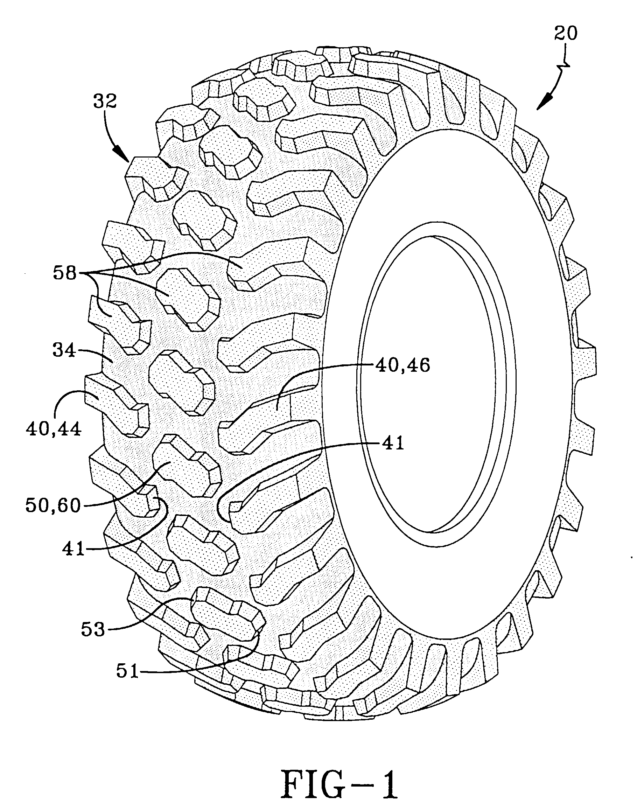

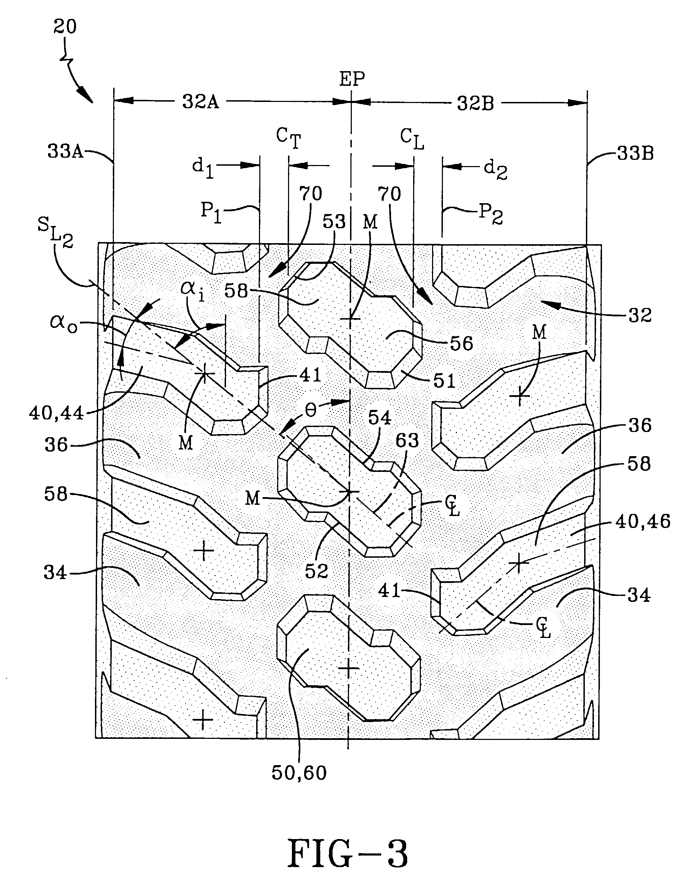

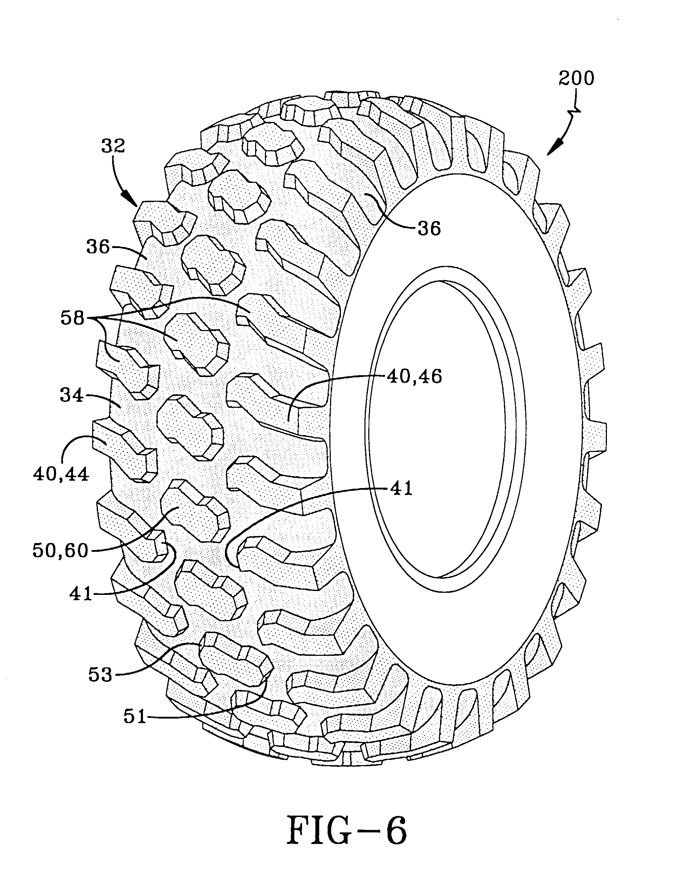

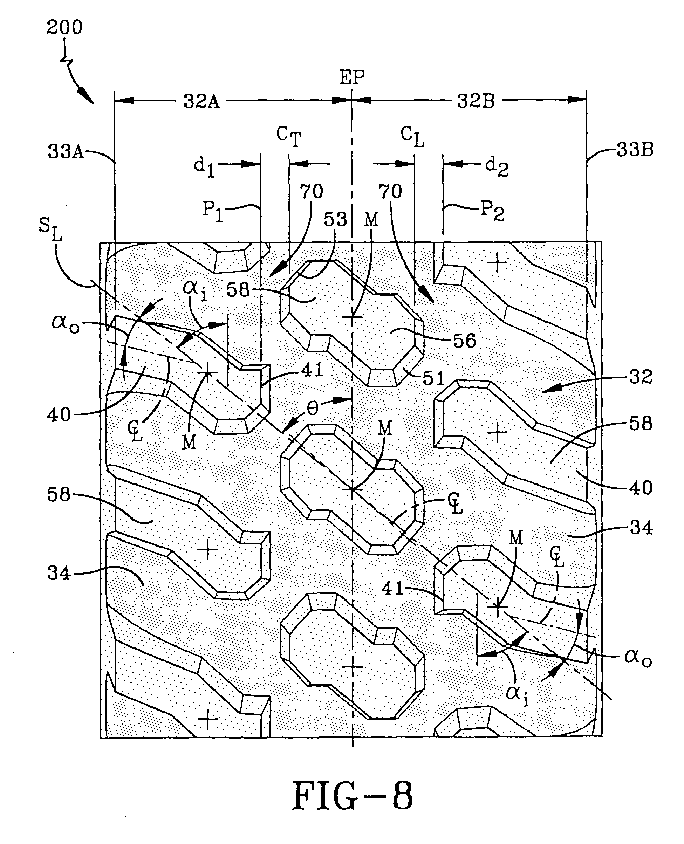

A sidewall portion 33 extends radially inwardly from each axial or lateral tread edge 33A,33B of the tread to an annular bead portion 35 having the beads 24 located therein. Carcass plies 22 preferably have the cords oriented radially. The number of plies depends on the load carrying requirements of the tire. This tire carcass and belt structure as shown in Fig. 4 is equally applicable for use in both embodiments of the present invention. Figs. 1-5 illustrate a directional tread made in accordance to the present invention, whereas Figs. 6-9 illustrate a tread pattern made in a nondirectional fashion.

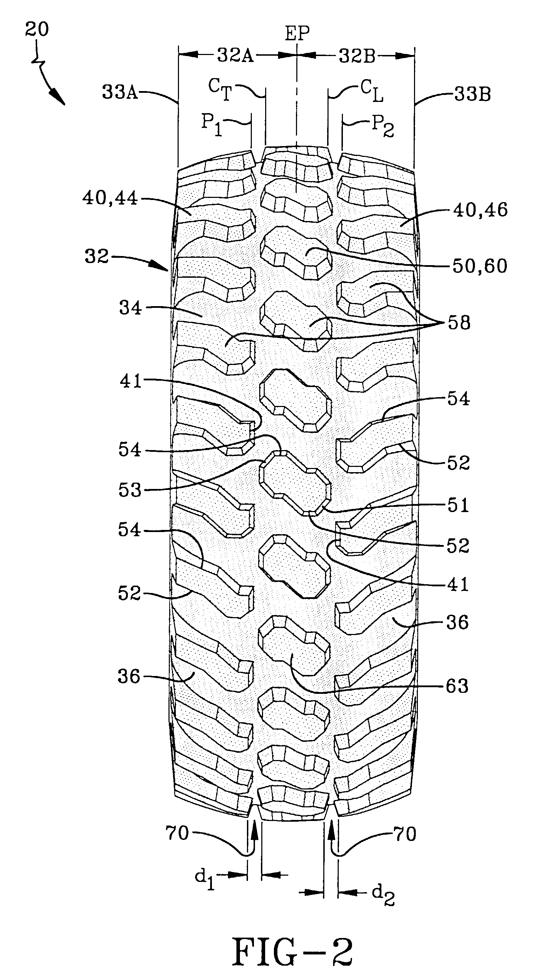

Now referring to Figs. 1-5, a tire 20 according to the present invention, is illustrated. The tire 20 according to the present invention has a unique directional tread 32. The tread 32 has a first tread edge 33A and a second tread edge 33B. Disposed between the tread edges 33A and 33B is an inner tread 34 and a plurality of central lugs 50 extending radially outwardly from the inner tread 34. As illustrated in Fig. 2 each central lug 50 has a radially outer surface 58, a leading first edge 52, a trailing second edge 54, and a center line between the first and second edges. Each central lug 50 extends generally circumferential from a leading end 51 to a trailing end 53.

The average distance along the center line 63 between the leading and trailing ends 51,53 defines the total lug length L₁ of the central lug. The length L₁ is at least 10% of the tread width, preferably about 30%.

The distance extending substantially perpendicularly between the first and second edges 52,54 of the central lug 50 defines the lug width. The radial distance extending between the inner tread 34 and the tread edges 52,54 of the lug defines the radial lug height (lₕ). At the equatorial plane of the tire 20 the lug height preferably is an R-4 type lug height as specified by the Tire & Rim Industry standard for industrial service applications.

The central lugs 50 are arranged in a circumferentially repeating row 60 of lugs 50, each lug 50 extends crossing the equatorial plane (EP). The circumferentially adjacent central lugs 50 are similarly oriented. Each lug 50 preferably lies equally within each of the respective tread halves 32A or 32B. The leading ends 51 as shown lie entirely within tread half 32A while the trailing ends 53 lie entirely the tread half 32B. These central lugs 50 have an enlarged lug head 55 at both the trailing and leading ends 51,53 of the lug 50. The width of the lugs 50 is enlarged relative to the shoulder lugs 40. This enlarged lug 50 is extremely durable and provides excellent traction and ride performance.

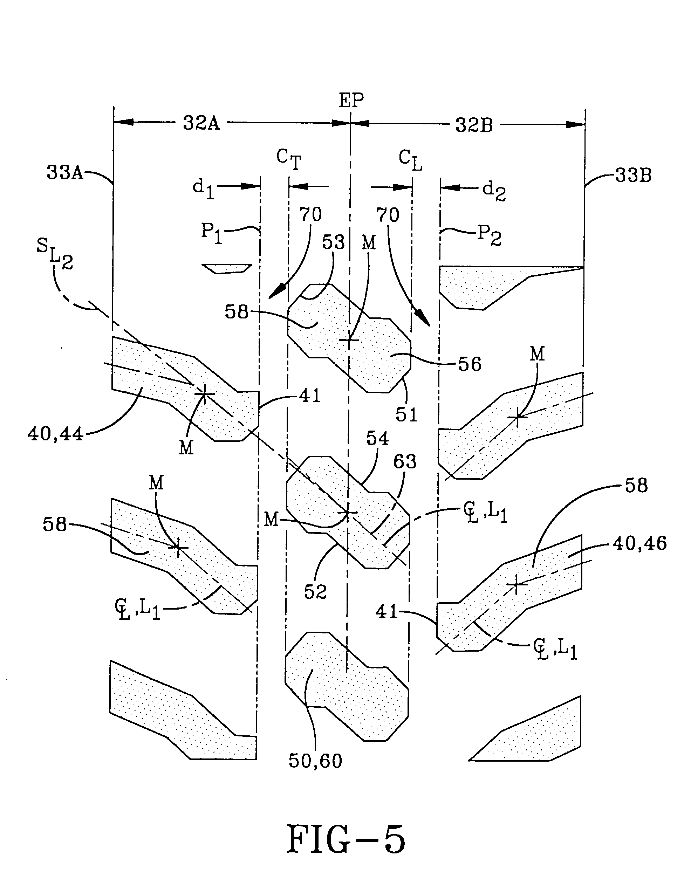

The ride performance and traction capabilities are further enhanced by the employment of a plurality of shoulder lugs 40 which extend from each respective tread edge 33A or 33B and lie entirely within one tread half 32A or 32B. The shoulder lugs 40 have a total lug length L₁ equal to or greater than the total lug length L₁ of the central lug 50. As shown, the shoulder lugs have a lug length L₁ of about 35% . The shoulder lugs are divided into two rows: a first row 44 and a second row 46. The first row 44 of shoulder lugs 40 has an axially inner end 41 that is located circumferentially between the trailing end 53 of circumferentially adjacent central lugs 50. The second row 46 of shoulder lugs 40 extends from the tread edge 33B and have a length substantially equal to the length of the first row of shoulder lugs. The second row 46 of shoulder lugs 40 have an axially inner end 41 that is circumferentially located between the leading ends 51 of circumferentially adjacent central lugs 50. As shown in Fig. 5, both the first row 44 and second row 46 of shoulder lugs 40 have preferably a compound inclination, the axially inner inclination αᵢ being about 45° relative to the equatorial plane and the axially outer inclination αₒ being about 60° relative to the equatorial plane. As further shown in Fig. 5, the central lug 50 has a middle portion which has a center line 63 intersecting the leading and trailing ends 51, 53 lying between edges 52,54. The centerline 63 is oriented at an angle θ of less than 50° preferably less than 45° relative to the equatorial plane.

As shown in Fig. 5, the net-to-gross ratio of the tread is less than 35%. The space between the lugs creates large soil discharge channels 36. These channels create a very open tread pattern. The openness of the tread pattern further enhances the self-cleaning properties of the tread 32 keeping it from packing with mud.

It is understood that one can vary the overall shape of the lugs 40,50 and can modify the general orientation or appearance of the lugs.

With further reference to Fig. 5, the first row 44 and second row 46 of shoulder lugs 40 and the central lugs 50 are axially spaced at the outer surface 58 of the lugs 40,50 such that the axially inner ends 41 of the first and second rows 44,46 of shoulder lugs 40 are axially aligned within each respective row 44,46. The leading ends 51 and the trailing ends 53 of the central lugs 50 are also respectively axially aligned. A plane P₁ is tangent to the inner ends 41 of the first row 44 of shoulder lugs 40 and is spaced an axial distance d₁ from a plane C_{T} tangent to the trailing ends 53 of the central lugs 50. A plane P₂ tangent to the axially inner ends 41 of the second row 46 of the shoulder lugs 40 is spaced a distance d₂ from a plane C_{L}. The plane C_{L} is tangent to the leading ends 51 of the central lugs 50. The distances d₁ and d₂ form two circumferentially continuous straight channels 70 around the periphery of the tread 32. The agricultural tire preferably has the distances d₁ and d₂ being equal and the planes C_{T} and C_{L} each located an axial distance of 5 % of the tread width or more from the equatorial plane (EP) as illustrated. Preferably the planes C_{T} and C_{L} are equally spaced from the equatorial plane (EP) a distance of at least 10% of the tread width.

The tire 20 as shown in Figs. 1-5 has a directional tread 32 with the first and second rows 44,46 of shoulder lugs 40 oppositely oriented and oppositely inclined relative to the shoulder lugs 40 of the opposite row.

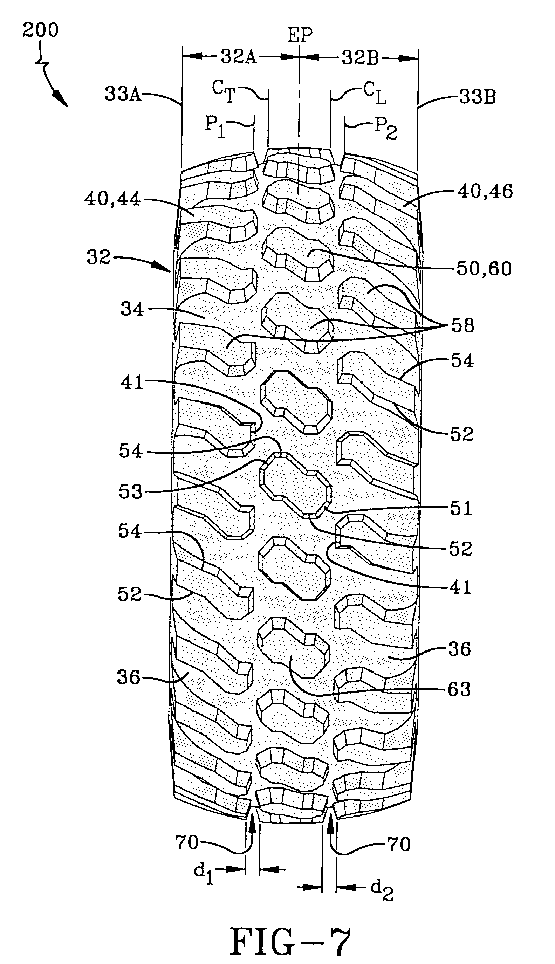

With reference to Figs. 6-9 a tread 32 of the second embodiment tire 200 is shown having a nondirectional tread pattern. For simplicity purpose the same reference numerals are used, the only difference lies in the treads 32, the tread 32 of tire 200 having the first row 44 of shoulder lugs 40 oppositely oriented but similarly inclined relative to the shoulder lugs 40 of the opposite row 46 as can be seen from the perspective view of Fig. 6 and the plan view of Fig. 7, the lugs 40 and 50 extending in a substantially linear fashion across the tread 32. In both tires 20,200 of the first and second embodiments when the tire is normally loaded and inflated, the tread 32 exhibits a net-to-gross ratio of less than 35 % preferably about 30%. Both tires 20,200 exhibit a nominal rim diameter of 28" (71 cm) or less and a tread lug height (lₕ) that is measured from the inner tread 34 to the radially outer surface 58 of the lugs 50 at the equatorial plane of an industry standard R-4 lug height. For example, in a 19.5LR24 tire, the nonskid depth at the centerline of the tires 20,200 will be approximately one inch (2.5 cm).

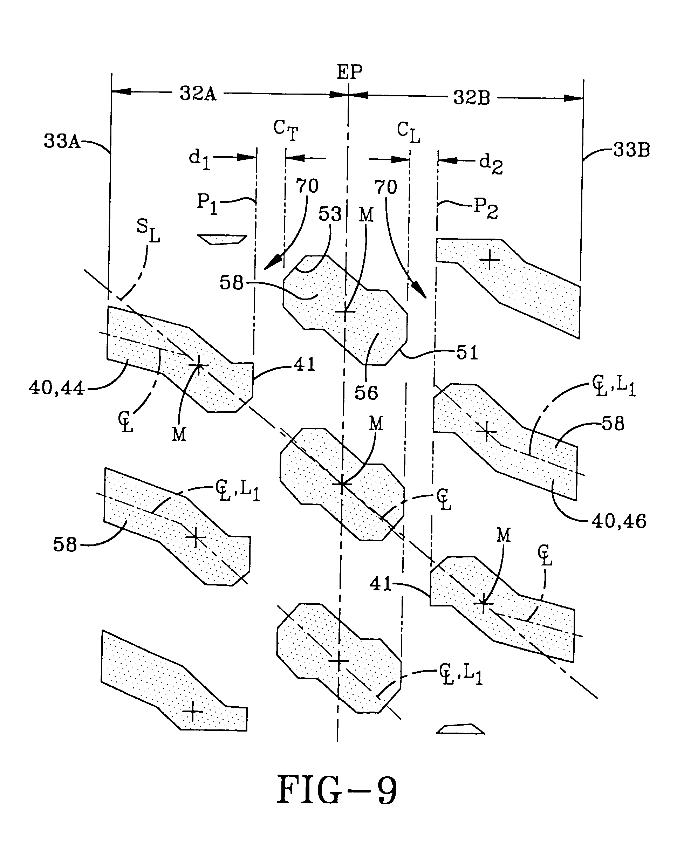

As illustrated in Figs. 5 and 9, each tire 20,200 has each shoulder lug 40 and each central lug 50 having a surface area centroid M. The nondirectional tire 200 of figure 9 has the centroids M of the first row shoulder lug 40, a central lug 50, and a second row shoulder lug 40 lie on a substantially straight line S_{L}, S_{L} being inclined in the range 35° to 45° relative to an axial plane as illustrated in Figs. 6-9. This tire 200 illustrated in Figs. 6-9 has the shoulder lugs 40 of the first and second row 44,46 and the central lugs 50 each having lug centerlines C_{L} intersecting the centroid M of the respective lugs. The lug centerlines C_{L} are substantially aligned with the line S_{L}.

Alternatively, the pneumatic agricultural tire 20 of Figs. 1-5 have each shoulder lug 40 and each central lug 50 having a surface area centroid M, the centroid M of the first or second shoulder lug 40 and the central lug 50 lie in a substantially straight line S_{L2}, S_{L2} being inclined in the range of 35° to 45° relative to an axial plane. This pneumatic agricultural tire 20 of Figs. 1-5 has each shoulder lug and central lug each having a lug centerline C_{L} intersecting the centroids M of the respective lugs. The lug centerlines C_{L} of the first row 44 of shoulder lugs 40 and the row 60 of central lugs 50 are substantially aligned with the straight line S_{L2} where the shoulder lug 40 centerline C_{L} of the second row 46 is similarly but oppositely inclined relative to the line S_{L2}.

With reference to Fig. 4 as can be seen from the cross-sectional view of the tire, the tires 20,200 have a constant tread arc at the shoulder, the nonskid depth increases to approximately 125% to 175%, preferably 150%, of the nonskid depth as measured from the equatorial plane (EP) of the tires 20,200.

Due to the contour of the tread 32 it can easily be appreciated that the center of the tread bears most of the load carrying capacity while the shoulder regions are provided to increase traction and provide additional biting or digging surfaces which provide traction particularly in loose soil or loose debris. It is believed preferable that the tread lugs 40,50 be reasonably braced using generous angles to further enhance the stiffness of the lugs and to improve its durability.

A novel feature of the directional tread pattern of the tire 20 as in Figs. 1-5 of the first embodiment and the nondirectional tread pattern of Figs. 6-9 of the second embodiment tire 200 is that the lugs 40 of the first row 44 and the lugs 40 of the second row 46 do not axially overlap at the equatorial plane. This was a common feature employed in industrial service R-4 tires of the prior art. Secondarily, the central lugs 50 do not overlap or interlock with either the first or the second rows 44,46 of shoulder lugs 40. Again, this feature is not believed to have been employed in this type of tire heretofore. The benefits of this feature are that the tread pattern remains relatively open increasing the overall tractive performance of the tire while not sacrificing the overall ride performance. In every aspect the description of the tire 20 of the first embodiment applies to the tire 200 of the second embodiment, the only difference being the orientation of the lugs 40 of the second row 46 of tire 20 and tire 200. In all other aspects the tires are the same.

## Claims

1. A pneumatic agriculture tire (20) for an industrial type tractor or like vehicle having a maximum section width, an axis of rotation, an equatorial plane (EP), centered between the maximum section width and being perpendicular to the axis, a casing having a belt reinforcement structure (26) and a carcass (21) reinforced with rubber coated cords, a rubber tread (32) disposed radially outwardly of the carcass, the tread being divided on each side of the equatorial plane (EP) into a first and a second tread half (32A,32B), the tread has a pair of lateral tread edges (33A, 33B), the distance between the tread edges defines the tread width, the tread has an inner tread (34) and a plurality of tread lugs (40, 50) projecting radially from the inner tread (34), the tread (32) having:
a plurality of central lugs (50) arranged in a circumferentially continuous row (60) and extending across the equatorial plane (EP), each central lug (50) being similar in shape and in orientation relative to each circumferentially adjacent central lug (50), each central lug (50) having a leading end (51) and a trailing end (53), the leading end (51) of each central lug (50) being located on an opposite side of the equatorial plane (EP) relative to the trailing end (53) of the same central lug, the central lugs (50) having an overall length of at least 10% of the tread width;
a plurality of shoulder lugs (40) divided into first and second rows (44, 46), one row (44,46) extending from each of the lateral tread edges (33A, 33B) toward the equatorial plane of the tire (20), the shoulder lugs (40) having an axially inner end (41) being axially spaced from the leading end (51) and the trailing end (53) of axially adjacent central lugs (50), the shoulder lugs (40) extending from each lateral tread edge being similar in shape and having an overall lug length of greater than 30% of the tread width, each shoulder lug (40) being located within one tread half, the shoulder lugs (40) and central lugs (50) being axially spaced at the outer surface (58) of the lugs (40, 50) such that the axially inner ends (41) of the first and second rows (44, 46) of shoulder lugs (40) are axially aligned within each respective row, and the leading ends (51) and trailing ends (53) of the central lugs (50) are respectively axially aligned,
the tread being characterized in that a plane P₁ tangent to the axially inner ends (41) of the first row (44) of shoulder lugs (40) is spaced an axial distance d₁ from a plane C_{T} tangent to the trailing ends (53) of the central lugs (50), and in that a plane P₂ tangent to the axially aligned inner ends (41) of the second row (46) of shoulder lugs (40) is spaced a distance d from a plane C_{L}, the plane C_{L} being tangent to the leading ends (51) of the central lugs (50), the distances d₁ and d₂ being at least 5% of the tread width and forming two circumferentially continuous straight channels around the periphery of the tread (32).

2. The pneumatic agricultural tire (20) of claim 1 wherein the central lug (50) has a lug length of about 30% of the tread width.

3. The pneumatic agricultural tire (20) of claim 2 wherein the distances d₁ and d₂ are equal.

4. The pneumatic agricultural tire (20) of claim 2 wherein the planes C_{T} and C_{L} are each located an axial distance of at least 5% of the tread width or more from the equatorial plane (EP).

5. The pneumatic agricultural tire (20) of claim 2 wherein the planes C_{T} and C_{L} are equally spaced from the equatorial plane (EP).

6. The pneumatic agricultural tire (20) of claim 1 wherein shoulder lugs (40) of the first and second rows (44, 46) are oppositely oriented and similarly inclined relatively to the shoulder lugs (40) of the opposite row (44, 46).

7. The pneumatic agricultural tire (20) of claim 1 wherein shoulder lugs (40) of the first and second rows are oppositely oriented and oppositely inclined relative to the shoulder lugs of the opposite row.

8. The pneumatic agricultural tire (20) of claim 1 where the tire has a normally inflated and normally loaded tread net-to-gross ratio of less than 35%.

9. The pneumatic agricultural tire (20) of claim 1 wherein the tire (20) has a nominal rim diameter of 61 cm (24 inches) or less and a tread lug height as measured from the inner tread (34) to the radially outer surface (58) of the lug (50) at the equatorial plane of an industry standard R-4 lug height.

10. The pneumatic agricultural tire (20) of claim 6 wherein each shoulder lug (40) and central lug (50) has a surface area centroid M, the centroid M of a first row shoulder lug, a central lug, and a second row shoulder lug lie on a substantially straight line S_{L}, S_{L} being inclined in the range of 35° to 45° relative to an axial plane.

11. The pneumatic agricultural tire (20) of claim 10 wherein the shoulder lugs (40) of the first and second row (44, 46) and the central lugs (50) each have lug centerlines (C_{L}) intersecting the centroids M of the respective lugs, the lug centerlines (C_{L}) being substantially aligned with the line S_{L}.

12. The pneumatic agricultural tire (20) of claim 7 wherein each shoulder lug (40) and central lug (50) has a centroid M, the centroid of a first or second shoulder lug and the central lug lie in a substantially straight line S_{L2}, S_{L2} being inclined in the range of 35° to 45° relative to an axial plane.

13. The pneumatic agricultural tire (20) of claim 12 wherein each shoulder lug (40) and central lug (50) each have a lug centerline (C_{L}) intersecting the centroids M of the respective lugs, the lug centerlines of a first shoulder lug (40) and the central lug (50) being substantially aligned with the line S_{L2} while the shoulder lug (40) centerline of a second row is similarly but oppositely inclined relative to the line S_{L2}.

## Patentansprüche

1. Landwirtschaftlicher Luftreifen (20) für einen Traktor für gewerbliche Zwecke oder ein ähnliches Fahrzeug mit einer maximalen Querschnittsbreite, einer Rotationsachse, einer Äquatorebene (EP), welche mittig zwischen der maximalen Querschnittsbreite liegt und senkrecht zur Achse ist, einem Unterbau mit einer Gürtel-Verstärkungsstruktur (26) und einer mit gummierten Korden verstärkten Karkasse (21), einer radial außerhalb der Karkasse befindlichen Gummilauffläche (32), wobei die Lauffläche auf jeder Seite der Äquatorebene (EP) in eine erste und eine zweite Laufflächenhälfte (32A, 32B) unterteilt ist, die Lauffläche ein Paar seitlicher Laufflächenkanten (33A, 33B) aufweist, der Abstand zwischen den Laufflächenkanten die Laufflächenbreite definiert, die Lauffläche eine innere Lauffläche (34) und eine Mehrzahl von Laufflächenstollen (40, 50) aufweist, welche radial aus der inneren Lauffläche (34) herausragen, wobei die Lauffläche (32) folgendes umfaßt:
eine Mehrzahl von mittleren Stollen (50), die in einer entlang des Umfangs fortlaufenden Reihe (60) angeordnet sind und quer zur Äquatorebene (EP) verlaufen, wobei jeder mittlere Stollen (50) eine ähnliche Form und ähnliche Ausrichtung zu jedem entlang des Umfangs benachbarten mittleren Stollen (50) aufweist, wobei jeder mittlere Stollen (50) ein vorderes Ende (51) und ein hinteres Ende (53) aufweist, wobei sich das vordere Ende (51) jedes mittleren Stollens (50) zum hinteren Ende (53) des gleichen mittleren Stollens auf einer gegenüberliegenden Seite der Äquatorebene (EP) befindet, wobei die mittleren Stollen (50) eine Gesamtlänge von mindestens 10% der Laufflächenbreite aufweisen;
eine Mehrzahl von in eine erste und eine zweite Reihe (44, 46) unterteilten Schulterstollen (40), wobei eine Reihe (44, 46) ausgehend von jeder der lateralen Laufflächenkanten (33A, 33B) zur Äquatorebene des Reifens (20) hin verläuft, die Schulterstollen (40) ein axial inneres Ende (41) aufweisen, das axial zum vorderen Ende (51) und dem hinteren Ende (53) axial benachbarter mittlerer Stollen (50) beabstandet ist, die ausgehend von jeder lateralen Laufflächenkante verlaufenden Schulterstollen (40) eine ähnliche Form haben und eine Gesamt-Stollenlänge von mehr als 30% der Laufflächenbreite aufweisen, jeder Schulterstollen (40) innerhalb einer Laufflächenhälfte liegt, die Schulterstollen (40) und die mittleren Stollen (50) an der Außenoberfläche (58) der Stollen (40, 50) derart axial beabstandet sind, daß die axial inneren Enden (41) der ersten und der zweiten Reihe (44, 46) von Schulterstollen (40) axial mit jeder entsprechenden Reihe fluchten und die vorderen Enden (51) und hinteren Enden (53) der mittleren Stollen (50) entsprechend axial fluchten,
wobei die Lauffläche dadurch gekennzeichnet ist, daß eine zu den axial inneren Enden (41) der ersten Reihe (44) von Schulterstollen (40) tangentiale Ebene P₁ in einem axialen Abstand d₁ zu einer zu den hinteren Enden (53) der mittleren Stollen (50) tangentialen Ebene C_{T} beabstandet ist, und daß eine zu den axial fluchtenden inneren Enden (41) der zweiten Reihe (46) von Schulterstollen (40) tangentiale Ebene P₂ in einem Abstand d₂ zu einer Ebene C_{L} beabstandet ist, wobei die Ebene C_{L} zu den vorderen Enden (51) der mittleren Stollen (50) tangential ist, wobei die Abstände d₁ und d₂ mindestens 5% der Laufflächenbreite betragen und zwei entlang des Umfangs fortlaufende gerade Kanäle um den Umfang der Lauffläche (32) herum bilden.

2. Landwirtschaftlicher Luftreifen (20) nach Anspruch 1, worin der mittlere Stollen (50) eine Stollenlänge von etwa 30% der Laufflächenbreite aufweist.

3. Landwirtschaftlicher Luftreifen (20) nach Anspruch 2, worin die Abstände d₁ und d₂ gleich sind.

4. Landwirtschaftlicher Luftreifen (20) nach Anspruch 2, worin die Ebenen C_{T} und C_{L} sich jeweils in einem axialen Abstand von mindestens 5% der Laufflächenbreite oder mehr zur Äquatorebene (EP) befinden.

5. Landwirtschaftlicher Luftreifen (20) nach Anspruch 2, worin die Ebenen C_{T} und C_{L} gleichmäßig zur Äquatorebene (EP) beabstandet sind.

6. Landwirtschaftlicher Luftreifen (20) nach Anspruch 1, worin Schulterstollen (40) der ersten und der zweiten Reihe (44, 46) zu den Schulterstollen (40) der gegenüberliegenden Reihe (44, 46) entgegengesetzt ausgerichtet und ähnlich geneigt sind.

7. Landwirtschaftlicher Luftreifen (20) nach Anspruch 1, worin Schulterstollen (40) der ersten und der zweiten Reihe zu den Schulterstollen der gegenüberliegenden Reihe entgegengesetzt ausgerichtet und entgegengesetzt geneigt sind.

8. Landwirtschaftlicher Luftreifen (20) nach Anspruch 1, worin der Reifen in normal aufgepumptem und normal belastetem Zustand ein Netto-Brutto-Verhältnis der Lauffläche von weniger als 35% aufweist.

9. Landwirtschaftlicher Luftreifen (20) nach Anspruch 1, worin der Reifen (20) einen Felgennenndurchmesser von 61 cm (24 Zoll) oder weniger und eine Laufflächen-Stollenhöhe, gemessen ausgehend von der inneren Lauffläche (34) zur radial äußeren Oberfläche (58) des Stollens (50) an der Äquatorebene, aufweist, bei welcher es sich um eine industriell genormte R-4-Stollenhöhe handelt.

10. Landwirtschaftlicher Luftreifen (20) nach Anspruch 6, worin jeder Schulterstollen (40) und jeder mittlere Stollen (50) einen Oberflächen-Mittelpunkt M aufweist, wobei der Mittelpunkt M eines Schulterstollens einer ersten Reihe, eines mittleren Stollens und eines Schulterstollens einer zweiten Reihe auf einer im wesentlichen geraden Linie S_{L} liegen, wobei S_{L} im Bereich von 35° bis 45° zu einer axialen Ebene geneigt ist.

11. Landwirtschaftlicher Luftreifen (20) nach Anspruch 10, worin die Schulterstollen (40) der ersten und der zweiten Reihe (44, 46) und die mittleren Stollen (50) jeweils Stollen-Mittellinien (C_{L}) aufweisen, welche die Mittelpunkte M der jeweiligen Stollen schneiden, wobei die Stollen-Mittellinien (C_{L}) im wesentlichen mit der Linie S_{L} fluchten.

12. Landwirtschaftlicher Luftreifen (20) nach Anspruch 7, worin jeder Schulterstollen (40) und jeder mittlere Stollen (50) einen Mittelpunkt M aufweist, wobei der Mittelpunkt eines ersten oder zweiten Schulterstollens und des mittleren Stollens auf einer im wesentlichen geraden Linie S_{L2} liegen, wobei S_{L2} im Bereich von 35° bis 45° zu einer axialen Ebene geneigt ist.

13. Landwirtschaftlicher Luftreifen (20) nach Anspruch 12, worin jeder Schulterstollen (40) und jeder mittlere Stollen (50) jeweils eine Stollen-Mittellinie (C_{L}) aufweist, welche die Mittelpunkte M der jeweiligen Stollen schneidet, wobei die Stollen-Mittellinien eines ersten Schulterstollens (40) und des mittleren Stollens (50) im wesentlichen mit der Linie S_{L2} fluchten, während die Mittellinie eines Schulterstollens (40) einer zweiten Reihe ähnlich, jedoch entgegengesetzt zur Linie S_{L2} geneigt ist.

## Revendications

1. Bandage pneumatique agricole (20) pour un tracteur de génie civil ou pour un véhicule analogue possédant une grosseur du boudin maximale, un axe de rotation, un plan équatorial (EP) centré entre la grosseur du boudin maximale et perpendiculaire à l'axe, une enveloppe possédant une structure de renforcement de ceinture (26) et une carcasse (21) renforcée avec des câblés enrobés de caoutchouc, une bande de roulement de caoutchouc (32) disposée en direction radiale à l'extérieur de la carcasse, la bande de roulement étant subdivisée de part et d'autre du plan équatorial (EP) en une première et en une deuxième moitié de bande de roulement (32A, 32B), la bande de roulement possède une paire de bords de bande de roulement latéraux (33A, 33B), la distance entre les bords de bande de roulement définit la largeur de bande de roulement, la bande de roulement possède une bande de roulement interne (34) et plusieurs barrettes de bande de roulement (40, 50) faisant saillie en direction radiale par rapport à la bande de roulement interne (34), la bande de roulement (32) comportant:
plusieurs barrettes centrales (50) disposées en une rangée continue (60) en direction circonférentielle et s'étendant à travers le plan équatorial (EP), chaque barrette centrale (50) étant de forme et d'orientation similaires à celles de chaque barrette centrale (50) adjacente en direction circonférentielle, chaque barrette centrale (50) possédant une extrémité avant (51) et une extrémité arrière (53), l'extrémité avant (51) de chaque barrette centrale (50) étant située sur le côté du plan équatorial (EP) opposé à celui occupé par l'extrémité arrière (53) de la même barrette centrale, les barrettes centrales (50) possédant une longueur globale représentant au moins 10% de la largeur de bande de roulement;
plusieurs barrettes d'épaulement (40) subdivisées en première et deuxième rangées (44, 46), une rangée (44, 46) s'étendant depuis chacun des bords de bande de roulement latéraux (33A, 33B) jusqu'au plan équatorial du pneumatique (20), les barrettes d'épaulement (40) possédant une extrémité interne (41) en direction axiale espacée en direction axiale de l'extrémité avant (51) et de l'extrémité arrière (53) de barrette centrale (50) adjacente en direction axiale, les barrettes d'épaulement (40) s'étendant depuis chaque bord de bande de roulement latéral étant de configuration similaire et possédant une longueur de barrette globale représentant plus de 30% de la largeur de la bande de roulement, chaque barrette d'épaulement (40) étant située dans les limites d'une demi-bande de roulement, les barrettes d'épaulement (40) et les barrettes centrales (50) étant espacées en direction axiale à la surface externe (58) des barrettes (40, 50) de telle sorte que les extrémités internes en direction axiale (41) des première et deuxième rangées (44, 46) de barrettes d'épaulement (40) sont disposées en alignement axial dans les limites de chaque rangée respective, les extrémités avant (51) et les extrémités arrières (53) des barrettes centrales (50) étant disposées respectivement en alignement axial,
la bande de roulement étant caractérisée en ce qu'un plan P₁ tangent aux extrémités internes (41) en direction axiale de la première rangée (44) de barrettes d'épaulement (40) est espacé sur une distance axiale d₁ par rapport à un plan C_{T} tangent aux extrémités arrières (53) des barrettes centrales (50) et en ce qu'un plan P₂ tangent aux extrémités internes (41) disposées en alignement axial de la deuxième rangée (46) de barrettes d'épaulement (40) est espacé sur une distance d₂ par rapport à un plan C_{L}, le plan C_{L} étant tangent aux extrémités avant (51) des barrettes centrales (50), les distances d₁ et d₂ représentant au moins 5% de la largeur de bande de roulement et formant deux canaux rectilignes continus en direction circonférentielle autour de la périphérie de la bande de roulement (32).

2. Bandage pneumatique agricole (20) selon la revendication 1, dans lequel la barrette centrale (50) possède une longueur de barrette représentant environ 30% de la largeur de bande de roulement.

3. Bandage pneumatique agricole (20) selon la revendication 2, dans lequel les distances d₁ et d₂ sont égales.

4. Bandage pneumatique agricole (20) selon la revendication 2, dans lequel les plans C_{T} et C_{L} sont chacun espacés sur une distance axiale représentant au moins 5% de la largeur de bande de roulement ou plus par rapport au plan équatorial (EP).

5. Bandage pneumatique agricole (20) selon la revendication 2, dans lequel les plans C_{T} et C_{L} sont équidistants par rapport au plan équatorial (EP).

6. Bandage pneumatique agricole (20) selon la revendication 1, dans lequel des barrettes d'épaulement (40) des première et deuxième rangées (44, 46) présentent une orientation opposée et une inclinaison similaire par rapport à celles des barrettes d'épaulement (40) de la rangée opposée (44, 46).

7. Bandage pneumatique agricole (20) selon la revendication 1, dans lequel les barrettes d'épaulement (40) des première et deuxième rangées présentent une orientation opposée et une inclinaison opposée par rapport à celles des barrettes d'épaulement de la rangée opposée.

8. Bandage pneumatique agricole (20) selon la revendication 1, dans lequel le pneumatique possède un rapport net/brut, lorsque la bande de roulement est normalement gonflée et normalement chargée, inférieur à 35%.

9. Bandage pneumatique agricole (20) selon la revendication 1, dans lequel le pneumatique (20) possède un diamètre de jante nominale de 61 cm (24 pouces) ou moins et une hauteur de barrette de bande de roulement, telle que mesurée entre la bande de roulement interne (34) et la surface externe (58) de la barrette (50) en direction radiale au plan équatorial, correspondant à une hauteur de barrette normale pour le génie civil de type R-4.

10. Bandage pneumatique agricole (20) selon la revendication 6, dans lequel chaque barrette d'épaulement (40) et chaque barrette centrale (50) possèdent un point de concours des médianes en surface M, le point de concours des médianes M d'une barrette d'épaulement de la première rangée, d'une barrette centrale et d'une barrette d'épaulement de la seconde rangée se trouvant sur une ligne essentiellement rectiligne S_{L}, S_{L} présentant une inclinaison dans le domaine de 35° à 45° par rapport au plan axial.

11. Bandage pneumatique agricole (20) selon la revendication 10, dans lequel les barrettes d'épaulement (40) des première et deuxième rangées (44, 46) et les barrettes centrales (50) possèdent chacune des médianes de barrettes C_{L} coupant les points de concours des médianes M des barrettes respectives, les médianes de barrettes C_{L} étant disposées essentiellement en alignement avec la ligne S_{L}.

12. Bandage pneumatique agricole (20) selon la revendication 7, dans lequel chaque barrette d'épaulement (40) et chaque barrette centrale (50) possède un point de concours des médianes M, le point de concours des médianes à d'une première ou d'une seconde barrette d'épaulement et de la barrette centrale se situe sur une ligne essentiellement rectiligne S_{L2}, S_{L2} présentant une inclinaison dans le domaine de 35° à 45° par rapport au plan axial.

13. Bandage pneumatique agricole (20) selon la revendication 12, dans lequel chaque barrette d'épaulement (40) et chaque barrette centrale (50) possède chacune une médiane de barrette C_{L} coupant les points de concours des médianes M des barrettes respectives, les médianes d'une première barrette d'épaulement (40) et de la barrette centrale (50) étant disposées essentiellement en alignement avec la ligne S_{L2}, tandis que la médiane de la barrette d'épaulement (40) d'une barrette de la deuxième rangée présente une inclinaison similaire, mais dans le sens opposé par rapport à la ligne S_{L2}.
